# EUROPEAN PATENT SPECIFICATION

(11) **EP 4 016 931 B1**
(45) Date of publication and mention of the grant of the patent: **05.11.2025**
(21) Application number: 20855131.7
(22) Date of filing: 02.04.2020
(51) Int. Cl.: H04L 47/20, H04L 47/24, H04L 47/10, H04L 47/21, H04J 3/16, H04L 47/36, H04L 47/28, H04Q 11/00

(54) **METHOD AND DEVICE FOR CONTROLLING DATA TRANSMISSION**
VERFAHREN UND VORRICHTUNG ZUR DATENÜBERTRAGUNGSSTEUERUNG
PROCÉDÉ ET DISPOSITIF DE COMMANDE DE TRANSMISSION DE DONNÉES

(30) Priority: 16.08.2019 CN 201910760630
(43) Date of publication of application: 22.06.2022
(73) Proprietor: Huawei Technologies Co., Ltd., Longgang District Shenzhen, Guangdong 518129 (CN)
(72) Inventor: SU, Wei, Shenzhen, Guangdong 518129 (CN); CHEN, Yujie, Shenzhen, Guangdong 518129 (CN); SUN, Liang, Shenzhen, Guangdong 518129 (CN); WU, Qiuyou, Shenzhen, Guangdong 518129 (CN)
(74) Representative: Epping - Hermann - Fischer
(86) International application number: PCT/CN2020/083049
(87) International publication number: WO 2021/031573

(56) References cited:
- EP-A1- 3 316 495
- CN-A- 101 022 361
- CN-A- 105 721 192
- CN-A- 107 770 091
- CN-A- 109 698 795
- CN-C- 100 452 717
- US-A1- 2003 011 844
- US-A1- 2008 002 676
- US-A1- 2017 359 244

## Description

### CROSS-REFERENCE TO RELATED APPLICATIONS

This application claims priority to Chinese Patent Application No. 201910760630.1, filed with the China National Intellectual Property Administration on August 16, 2019 and entitled "DATA SENDING CONTROL METHOD AND APPARATUS'.

### TECHNICAL FIELD

Embodiments of this application relate to the field of communication technologies, and in particular, to a data sending control method and apparatus, and a chip.

### BACKGROUND

Currently, the industry is considering using data units to implement flexible convergence and bearing of a plurality of services. The plurality of services are separately mapped to different data units, and strict fixed bandwidths are configured for data flows formed by a plurality of data units corresponding to the plurality of services. The data flows of the plurality of data units are converged and mapped to a payload area of an optical payload unit of an optical transport network (optical transport network, OTN). A service convergence time is random. For example, when the plurality of services are converged and have sending permission at the same time, a sending conflict occurs.

Therefore, there is an urgent need for an effective data unit mapping mechanism, which can ensure sufficient bandwidths for each service and reflect differentiated service transmission without increasing a service transmission delay.

EP 3316495 A1 discloses a data transmission method including: determining synchronization header indication information that is used to indicate a frame header location of a first code stream, where the first code stream is obtained by encoding CPRI service data; decoding the first code stream to obtain a second code stream, where the first code stream is a 10B code stream, and the second code stream is an 8B code stream, or the first code stream is a 66B code stream, and the second code stream is a 64B code stream; inserting frame header indication information that is used to indicate a frame header location of the second code stream into the second code stream according to the synchronization header indication information; and mapping the second code stream and the frame header indication information into an OPU in an ODU frame.

### SUMMARY

The invention is set out in the appended set of claims.

Embodiments of this application provide a data sending control method and apparatus, and a chip, to resolve a problem of a relatively high service transmission delay.

According to a first aspect, an embodiment of this application provides a data sending control method. The method is applied to a transmitting end. The method includes: determining, based on a line rate capacity and a service rate capacity of a first service, whether the first service obtains sending permission, where the line rate capacity is a maximum quantity of data units carried in a data frame, and the service rate capacity is a quantity of data units that are in the maximum quantity of data units carried in the data frame and that are used to carry the first service; and when the first service obtains the sending permission, accumulating a sending permission count value of the first service; and when it is determined that a sending condition of the first service is met, mapping the data unit of the first service to the data frame and decrementing the sending permission count value of the first service; or when the first service does not obtain the sending permission and it is determined that a sending permission count value of the first service is greater than zero and a sending condition of the first service is met, mapping the data unit of the first service to the data frame and decrementing the sending permission count value of the first service.

The sending permission count value is introduced in the foregoing solution. Even if a conflict exists between services and a service cannot be sent in time, a sending permission count value of the service is still accumulated. When the service meets a sending condition, service data can be sent in time based on the accumulated sending permission, thereby reducing a sending delay.

In a possible design, the determining, based on a line rate capacity and a service rate capacity of a first service, whether the first service obtains sending permission includes: determining, based on the line rate capacity, the service rate capacity of the first service, and a quantity of mapped data units in the data frame, whether the first service obtains the sending permission. The foregoing design is a simple and easy manner of determining whether to obtain the sending permission.

In a possible design, the determining, based on the line rate capacity, the service rate capacity of the first service, and a quantity of mapped data units in the data frame, whether the first service obtains the sending permission may be implemented in any one of the following implementations:

In a first possible implementation manner, when (A + j) x C mod P < C , it is determined that the first service obtains the sending permission; or when (A + j) x C mod P ≥ C, it is determined that the first service does not obtain the sending permission; where P represents the line rate capacity, C represents the service rate capacity of the first service, j represents the quantity of mapped data units in the data frame, A represents an initial value of counting the quantity of mapped data units in the data frame, and A is an integer greater than or equal to 0.

In a second possible implementation manner, when [(A + j) mod P] x C mod P < C, it is determined that the first service obtains the sending permission; or when [(A + j) mod P] x C mod P ≥ C, it is determined that the first service does not obtain the sending permission.

In a possible design, services processed in parallel by the transmitting end further include a second service in addition to the first service, and A corresponding to the first service may be the same as or different from A corresponding to the second service. When processing service data, the transmitting end may process a plurality of services in parallel. For different services, A uses different values, so that a probability that the plurality of services processed in parallel obtain sending permission at the same time can be reduced, thereby reducing a service transmission conflict.

In a possible design, the sending condition includes at least one of the following: a bit length of to-be-sent service data of the first service is greater than or equal to a bit length of the data unit, a priority of the first service meets a priority requirement of the currently to-be-mapped data unit, and a service carried by the data unit currently to be mapped to the data frame according to a service polled sequence is the first service.

In a possible design, the sending condition further includes: a sending interval count value of the first service meets a requirement of a preconfigured value, and the preconfigured value is a positive integer less than or equal to the line rate capacity.

The method further includes: when the data unit of the first service is to be mapped to the data frame, counting the sending interval count value, where a counting step is the service rate capacity of the first service; and when the data unit of the first service is mapped to the data frame, resetting the sending interval count of the first service and restarting counting.

In an example, counting the sending interval count value may be decrement. When each round of determining whether a data unit of the first service is mapped to the data frame is started, the service rate capacity of the first service is decremented from the sending interval count value of the first service. In this example, the preconfigured value may be 0, and whether the sending interval count value of the first service meets the requirement of the preconfigured value may mean whether the sending interval count value of the first service is less than or equal to 0. Each time the data unit of the first service is mapped to the data frame, the sending interval count is reset and counting is restarted. For example, the sending interval count may be reset to Y, where Y is a positive integer less than or equal to P, for example, Y = P/2.

In another example, counting the sending interval count value may be accumulation. When each round of determining whether a data unit of the first service is mapped to the data frame is started, the service rate capacity of the first service is accumulated to the sending interval count value of the first service. In this example, the preconfigured value may be X, where X is a positive integer less than or equal to P, for example, X = P/2, and whether the sending interval count value of the first service meets the preconfigured value requirement may mean whether the sending interval count value of the first service is greater than or equal to X. Each time the data unit of the first service is mapped to the data frame, the sending interval count is reset and counting is restarted. For example, the sending interval count may be reset to 0.

In the foregoing example manner, a problem of buffer overflow on a downstream node caused by a service data burst of the first service, in other words, caused by a case in which a plurality of data units exist in a buffer storing the first service, can be avoided.

According to a second aspect, an embodiment of this application provides another OTN data sending control method. The method is applied to a transmitting end. The method includes: when a data unit of a first service is to be mapped to a data frame in a current round, accumulating a service count value to a service rate capacity of the first service, where the service count value is used to determine whether the first service obtains sending permission; when it is determined, based on the service count value of the first service, that the first service obtains the sending permission and it is determined that a sending condition of the first service is met, mapping the data unit of the first service to the data frame; and when it is determined that the sending condition of the first service is not met, performing a next round of determining procedure of mapping a data unit of the first service to the data frame; where the service rate capacity is a quantity of data units that are in a maximum quantity of data units carried in the data frame and that are used to carry the first service.

In the foregoing solution, when the sending condition is not met, a value of a service counter M is continuously accumulated and increased by C, that is, the sending permission of the first service is accumulated. Even if a conflict exists between services and a service is not sent in time, the value of M is still accumulated. When the service meets a sending condition, M still meets a requirement, and service data can be sent in time based on the accumulated sending permission, thereby reducing a sending delay.

In a possible design, the sending condition includes at least one of the following: a bit length of to-be-sent service data of the first service is greater than or equal to a bit length of the data unit, a priority of the first service meets a priority requirement of the currently to-be-mapped data unit, and a service carried by the data unit currently to be mapped to the data frame according to a service polled sequence is the first service.

In a possible design, the sending condition further includes: a sending interval count value of the first service meets a requirement of a preconfigured value, and the preconfigured value is a positive integer less than or equal to a line rate capacity.

The method further includes: when the data unit of the first service is to be mapped to the data frame, counting the sending interval count value, where a counting step is the service rate capacity of the first service; and when the data unit of the first service is mapped to the data frame, resetting the sending interval count of the first service and restarting counting.

An effect achieved by this aspect is similar to an effect achieved by introducing the sending interval count value in the first aspect, and details are not described herein again.

According to a third aspect, an embodiment of this application provides an apparatus. The apparatus includes a processor and a memory. The memory is configured to store program code, and the processor is configured to read and execute the program code stored in the memory, to implement the method according to any one of the first aspect or the designs of the first aspect, or the method according to any one of the second aspect or the designs of the second aspect.

According to a fourth aspect, an embodiment of this application provides a computer-readable storage medium. The computer-readable storage medium stores a software program, and when the software program is read and executed by one or more processors, the method provided in any design of the first aspect or the second aspect may be implemented.

According to a fifth aspect, an embodiment of this application provides a computer program product including instructions. When the instructions are run on a computer, the computer is enabled to perform the method provided in any design of the first aspect or the second aspect.

According to a sixth aspect, an embodiment of this application provides a chip. The chip is connected to a memory, and is configured to read and execute software program stored in the memory, to implement the method provided in any design of the first aspect or the second aspect.

### BRIEF DESCRIPTION OF DRAWINGS

FIG. 1 is a schematic architectural diagram of an OTN network according to an embodiment of this application;
FIG. 2 is a schematic structural diagram of an OTN device according to an embodiment of this application;
FIG. 3 is a possible schematic structural diagram of a data unit according to an embodiment of this application;
FIG. 4 is a schematic diagram of mapping a data unit to a payload area of an optical payload unit (OPU) according to an embodiment of this application;
FIG. 5 is a schematic flowchart of a possible data sending control method according to an embodiment of this application;
FIG. 6 is a schematic flowchart of another possible data sending control method according to an embodiment of this application;
FIG. 7A and FIG. 7B is a schematic flowchart of a third possible data sending control method according to an embodiment of this application;
FIG. 8 is a schematic flowchart of a fourth possible data sending control method according to an embodiment of this application;
FIG. 9 is a schematic flowchart of a fifth possible data sending control method according to an embodiment of this application;
FIG. 10A to FIG. 10D is a schematic flowchart of a sixth possible data sending control method according to an embodiment of this application;
FIG. 11 is a schematic structural diagram of a possible data sending control apparatus according to an embodiment of this application; and
FIG. 12 is a schematic structural diagram of another possible data sending control apparatus according to an embodiment of this application.

### DESCRIPTION OF EMBODIMENTS

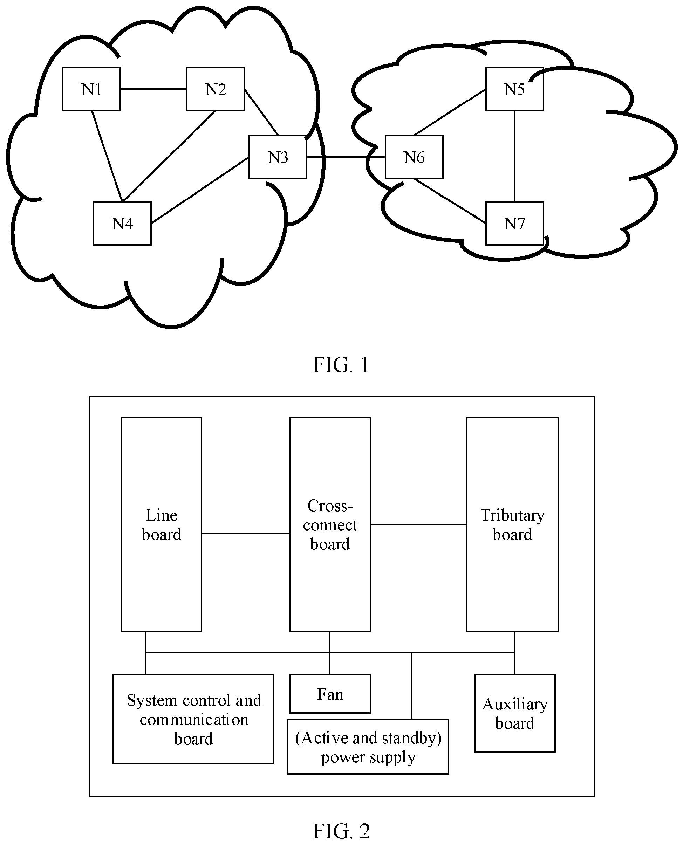

Embodiments of this application are applicable to an optical network, for example, an OTN. One OTN is usually formed by a plurality of devices connected through optical fibers and may be formed into different types of topologies such as linear, ring, and mesh topologies as required. An OTN shown in FIG. 1 includes two OTN networks. Each OTN network includes a specific quantity of OTN devices (N1 to N7). One OTN device may have different functions based on an actual requirement. Generally, OTN devices are classified into an optical-layer device, an electrical-layer device, and an optical/electrical hybrid device. The optical-layer device is a device that can process an optical-layer signal, for example, an optical amplifier (optical amplifier, OA). The electrical-layer device is a device that can process an electrical-layer signal, for example, a device that can process an OTN signal. The optical/electrical hybrid device is a device that can process an optical-layer signal and an electrical-layer signal. It should be noted that, one OTN device may integrate a plurality of different functions based on a specific integration requirement. Technical solutions provided in this application are applicable to OTN devices in different forms and having different levels of integration.

FIG. 2 is a schematic structural diagram of a possible OTN device. The OTN device herein may refer to the OTN nodes (N1 to N7) in FIG. 1. Specifically, one OTN device includes a power supply, a fan, and an auxiliary board, and may further include a tributary board, a line board, a cross-connect board, an optical-layer processing board, and a system control and communication board. The power supply is configured to supply power to the OTN device, and may include an active power supply and a standby power supply. The fan is configured to dissipate heat for the device. The auxiliary board is configured to provide an auxiliary function, for example, providing an external alarm or accessing an external clock. The tributary board, the cross-connect board, and the line board are mainly configured to process an electrical-layer signal of the OTN device. The tributary board is configured to receive and send various client services, such as an SDH service, a packet service, an Ethernet service, and a fronthaul service. Further, the tributary board may be divided into a client-side optical module and a signal processor. The client-side optical module may be an optical transceiver, and is configured to receive and/or send service data. The signal processor is configured to implement mapping and demapping between the service data and a data frame. The cross-connect board is configured to implement switching of data frames, and complete switching of one or more types of data frames. The line board mainly processes a line-side data frame. Specifically, the line board may be divided into a line-side optical module and a signal processor. The line-side optical module may be a line-side optical transceiver, and is configured to receive and/or send the data frame. The signal processor is configured to multiplex and demultiplex the line-side data frame, or map and demap the line-side data frame. The system control and communication board is configured to implement system control and communication. Specifically, information may be collected from the different boards by using a backplane, or a control instruction is sent to a corresponding board. It should be noted that, unless otherwise specified, there may be one or more specific components (for example, the signal processor). This is not limited in this application. It should be further noted that a type, a specific function design, and a quantity of the boards included in the device are not limited in this embodiment of this application.

It should be noted that types and quantities of boards specifically included in each device may be different. For example, a network device serving as a core node may not have a tributary board. A network device serving as an edge node may have a plurality of tributary boards.

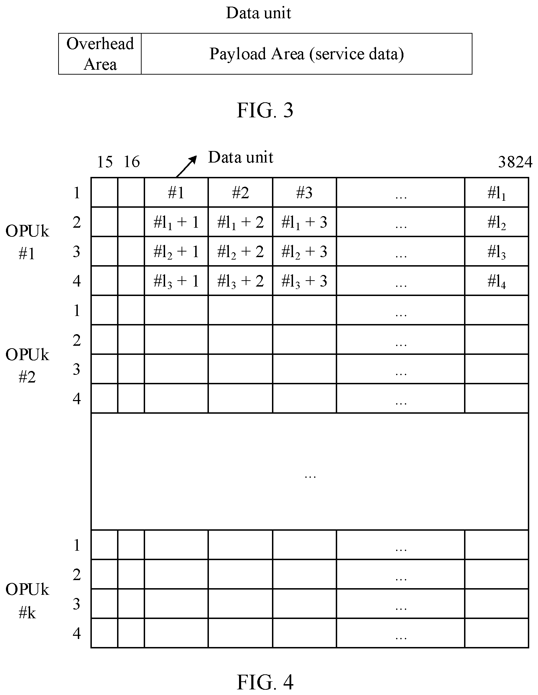

The following first describes technical concepts in the embodiments of this application.
(1) A line rate capacity (P) indicates a maximum quantity of data units carried by a line bandwidth, or a maximum quantity of data units carried by one or more data frames, and may also be referred to as a line sending period. For example, P may be determined by using a line sending rate and a transmission rate of a data unit, to be specific, P = line sending rate/transmission rate of one data unit = OTN data frame payload rate/transmission rate of one data unit. In addition, P may also be considered as a transmission rate in a unit of data units on a line, to be specific, P indicates that P data units can be sent on the line at a fixed time.
(2) A service rate capacity (C) indicates a quantity of data units that are in a maximum quantity of data units carried in a data frame and that are used to carry a service. To be specific, when P data units are sent on a line, C data units in the P data units carry a first service. For example, the C value may be determined in the following manner: C = service transmission rate/payload rate of a data unit. In addition, C may also be considered as a transmission rate of the first service on the line in a unit of data units, to be specific, C indicates that the first service is sent by using the C data units at a fixed time.
(3) A data unit includes an integer multiple of bytes or bits. The data unit may also be referred to as an optical service data unit, an optical service unit, a payload code block, a payload block, a switching unit, or a switching code block. This is not specifically limited in this application. FIG. 3 is a possible schematic structural diagram of a data unit. As shown in FIG. 3, the data unit includes an overhead area and a payload area. The overhead area may include but is not limited to at least one of the following: a service frame header indication, a trail trace identifier (trail trace identifier, TTI), a bit interleaved parity-X (X Bit-interleaved parity, BIP-X), a backward error indication (backward error indication, BEI), a backward defect indication (backward defect indication, BDI), a status (Status, STAT), a timestamp, a sequence identifier, a mapping overhead, and the like. The payload area is used to carry service data. For example, the data unit may be 8 bytes, 16 bytes, 32 bytes, 64 bytes, 128 bytes, 196 bytes, 256 bytes, 512 bytes, or the like. A quantity of bits or a quantity of bytes occupied by the data unit is not limited in this embodiment of this application.
(4) A data frame may be an OTN frame or a flexible Ethernet (Flex Ethernet, FlexE) frame, and is used to carry various types of service data, to implement management and monitoring of the service data. The OTN frame may be an optical data unit (optical data unit, ODU)k, an ODUCn, an ODUflex, an optical transport unit (optical transport unit, OTU)k or an OTUCn, an optical payload unit (optical payload unit, OPU), a flexible OTN (flexible OTN, FlexO) frame, or the like. The data frame may alternatively have another frame structure used in an optical network.
(5) Mapping a data unit to a data frame: An example in which the data frame is an OPU frame is used. An OPU may include an integer multiple of data units. FIG. 4 is a schematic diagram of mapping a data unit to a payload area of an optical payload unit (OPU). A payload area of a single OPU frame is divided into *I*₄ data units, in other words, at most *I*₄ data units are mapped to the OPU frame. For example, when a data unit size is 16 bytes, a payload area of one OPU frame may include 952 data units. In addition, a plurality of OPU frames may be combined as one multiframe for data unit division. As shown in FIG. 4, for example, there are k OPU frames. When the data unit size is 192 bytes, three OPU frames are combined as one multiframe for data unit division, and a total of 238 data units may be carried. When a plurality of services are mapped to the payload area of the OPU frame, data units corresponding to the services are mapped to data unit locations in the OPU frame one by one.
(6) "%" in this embodiment of this application represents a modulo operator. For example, A % B represents a remainder obtained by dividing A by B. A % B may alternatively be represented as A mod B, where "mod" is a modulo operator.
(7) "Decrement" in this embodiment of this application may also be referred to as "cumulative subtraction", and all refer to successive subtraction of a specific value. "A plurality of" refers to two or more than two. The term "and/or" describes an association relationship for describing associated objects and represents that three relationships may exist. For example, A and/or B may represent the following three cases: Only A exists, both A and B exist, and only B exists. In addition, it should be understood that in the description of this application, terms such as "first" and "second" are merely used for distinguishing and description, but should not be understood as indicating or implying relative importance, or should not be understood as indicating or implying a sequence.

To ensure that each service has sufficient bandwidths for utilization and reflect differentiated service transmission, a rate supervision mapping mechanism may be used to control mapping of service data. Each time a data unit of the service is mapped to a data frame on a line of a transmitting end, a service counter of the first service is accumulated by C, and then it is determined whether the service counter M >= P is met. When M is less than P, it indicates that the first service does not obtain sending permission, and a next round of determining procedure of whether a data unit of the first service is mapped to the data frame is performed on the line. If M >= P, it is necessary to continue to determine whether a buffer includes a complete data unit and whether a priority requirement of the first service is met for the first service. After the sending permission of the first service is obtained, if it is determined that the priority requirement is not met, mapping is not performed. In this case, M retains an original value, in other words, the first service loses the sending permission this time. In other words, when a sending conflict exists in different services, the first service with a low priority does not obtain an opportunity to send the data unit in the buffer. However, service data of the first service is still continuously input into the buffer, but actual sending permission of the first service is still the original count value of M, and is not accumulated synchronously. As a result, the service data of the first service in the buffer continuously increases, and a residence time of the first service increases.

Based on this, the embodiments of this application provide two feasible implementation solutions, as an example, to resolve a problem that a service delay increases when a sending conflict occurs in a plurality of services.

In a first feasible implementation solution, a sending permission count value (Sr) is introduced. Even if a conflict exists between services and a service is not sent in time, Sr corresponding to the service is still accumulated. When the service meets a sending condition, service data can be sent in time based on accumulated sending permission.

It should be noted that the "sending permission" may also be referred to as another name, for example, "sending opportunity", "sent opportunity", "mapping opportunity", or "mapped opportunity". Based on this, the sending permission count value may also be referred to as a sending opportunity count value, a sent opportunity count value, a mapping opportunity count value, a mapped opportunity count value, or the like.

In a second feasible implementation solution, when a sending condition (for example, a service priority requirement) of a service is not met, a value of a service counter M continues to be accumulated and increased by C, to indirectly implement accumulation of sending permission count.

The following describes in detail the first feasible implementation solution.

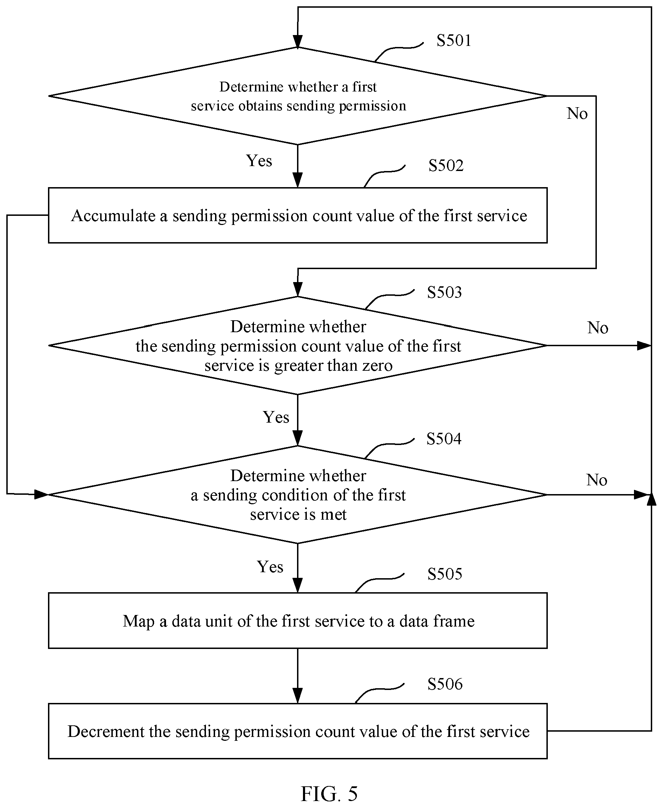

FIG. 5 is a schematic flowchart of an OTN data sending control method according to an embodiment of this application. The control method may be applied to a transmitting end. For example, an OTN device at the transmitting end may execute a control method procedure. Specifically, a processor, a chip, a chip system, a module having a sending control function, or the like in the transmitting-side OTN device may execute the control method procedure.

As shown in FIG. 5, the control method includes the following steps.

S501: The transmitting end determines whether a first service obtains sending permission.

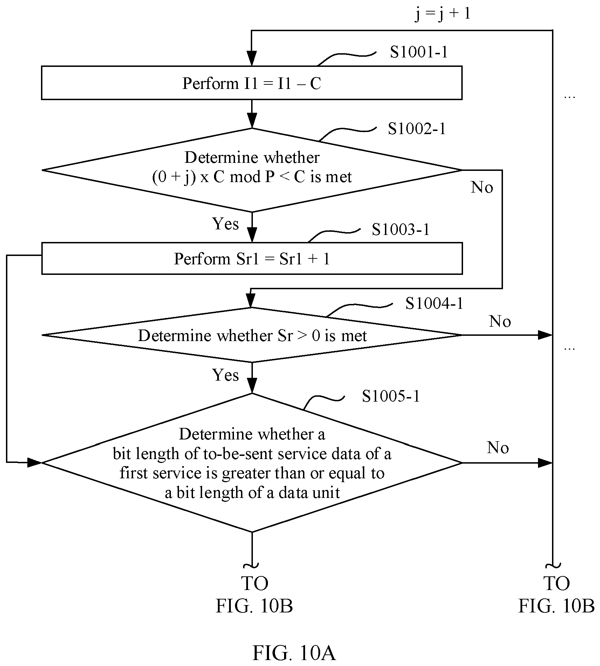

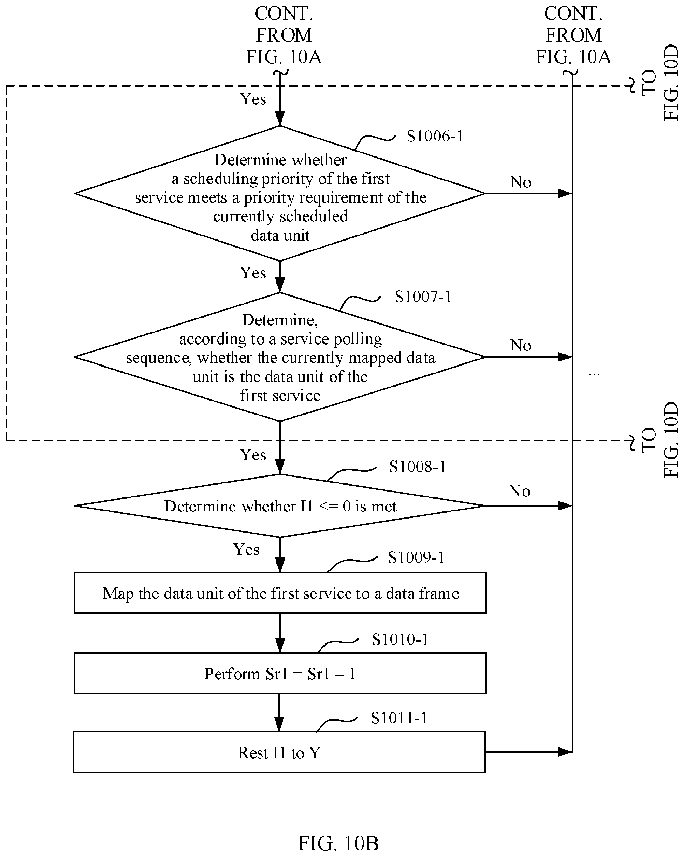

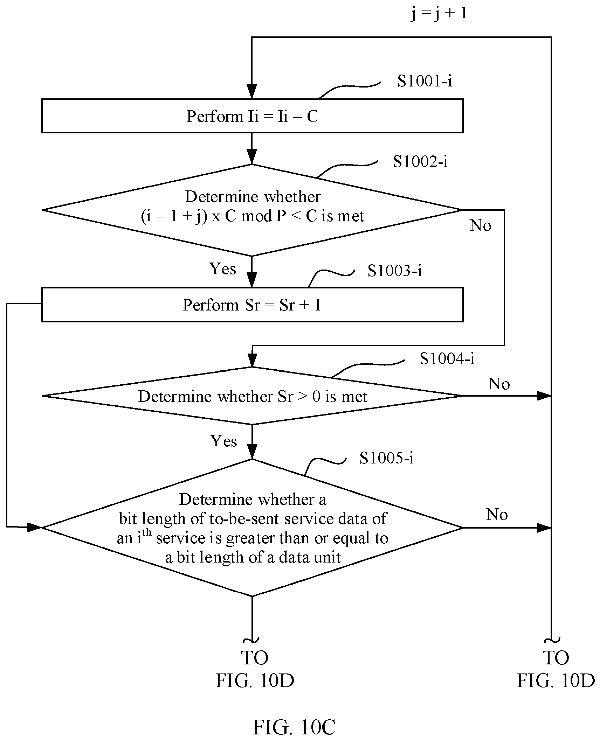

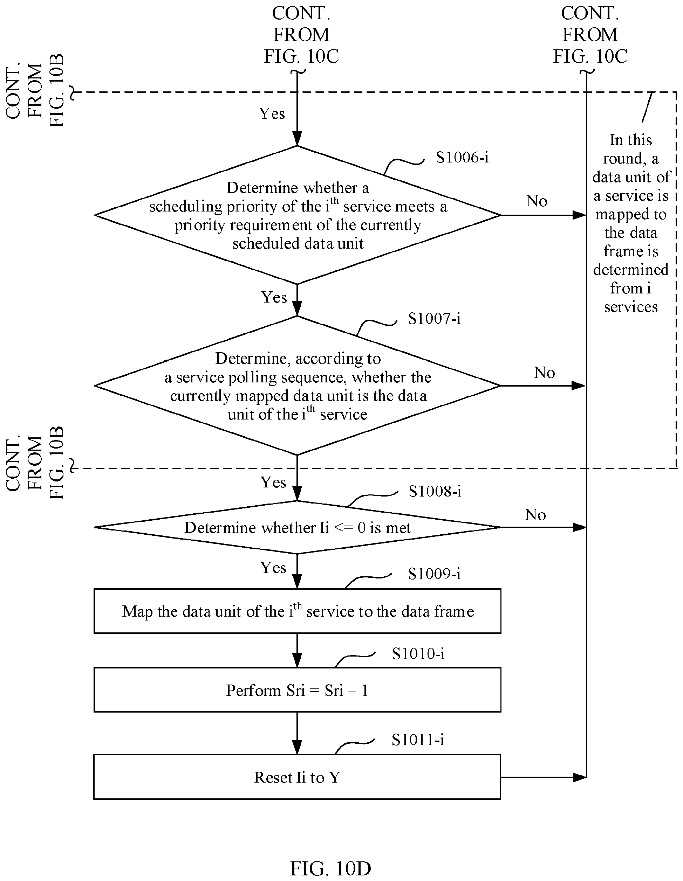

If yes, in other words, the first service obtains the sending permission, S502 is performed. If no, in other words, the first service does not obtain the sending permission, S503 is performed. The transmitting end cyclically maps a data unit to a data frame. For the first service, it is determined in each round whether the sending permission is obtained, and whether a data unit of the first service is mapped to the data frame. In this embodiment of this application, the first service is used as an example. Certainly, for another service, when the transmitting end needs to map a data unit to the data frame, a procedure similar to a procedure performed by the first service is performed. For a process of parallel processing for a plurality of services, refer to related descriptions in FIG. 10A to FIG. 10D. Details are not described herein.

S502: The transmitting end accumulates a sending permission count value of the first service, and performs S504.

S503: The transmitting end determines whether the sending permission count value of the first service is greater than zero, and
if yes, performs S504; or if no, performs S501. To be specific, the transmitting end continues to perform a next round of determining procedure of mapping a data unit to the data frame, and continues to determine whether the first service obtains next sending permission.

S504: The transmitting end determines whether a sending condition of the first service is met, and if yes, performs S505.

The sending condition includes at least one of a first condition, a second condition, or a third condition. The first condition is that a receiving buffer of the first service includes one complete data unit. For example, a quantity of bits of one data unit is 32 bytes. If a quantity of bytes of service data of the first service included in the receiving buffer is greater than 32 bytes, the receiving buffer of the first service includes one complete data unit. In other words, a bit length of to-be-sent service data of a current first service is greater than or equal to a bit length of the data unit. The second condition is that a scheduling priority of the first service meets a priority requirement of the currently mapped data unit. The third condition is that a service carried by the currently mapped data unit according to a service polled sequence is the first service. For example, currently mapped services include the first service, a second service, and a third service. A priority of the second service is higher than a priority of the first service and a priority of the third service, the priority of the first service is the same as the priority of the third service, and polling is performed between the first service and the third service. Therefore, service data of the second service is preferably sent according to a priority sequence. When the service data of the second service does not obtain sending permission or a bit length of to-be-sent service data does not meet a requirement, data units of the first service and the third service are mapped to the data frame in a polling manner. For example, a data unit of the first service is mapped to the data frame last time, and a data unit of the third service is mapped to the data frame according to the polled sequence this time.

In an example, when priorities of a plurality of services processed in parallel by the transmitting end are not differentiated, in other words, the priorities of all the services are the same, the sending conditions may include only the first condition and the third condition. In another example, when priorities of a plurality of services processed in parallel by the transmitting end are different, the sending conditions may include only the first condition and the second condition. In still another example, when priorities and sequences of a plurality of services processed in parallel by the transmitting end are not differentiated, or the transmitting end currently processes only one service, the sending condition may include only the first condition.

It should be noted that a determining sequence of determining that the first condition to the third condition are met is not limited in this embodiment of this application.

S505: The transmitting end maps the data unit of the first service to the data frame, and performs S506.

S506: The transmitting end decrements the sending permission count value of the first service, and performs S501.

It should be understood that a value increased when the sending permission count values are accumulated is the same as a value decreased when the sending permission count values are decremented. For example, when the sending permission count value of the first service is accumulated, Sr = Sr + 1 may be performed. When the sending permission count value of the first service is decremented, Sr = Sr - 1 may be performed.

In a possible example, when determining whether the sending permission of the first service is obtained, the transmitting end may determine, based on a line rate capacity and a service rate capacity of the first service, whether the first service obtains the sending permission. Specifically, whether the first service obtains the sending permission is determined based on the line rate capacity, the service rate capacity of the first service, and a quantity of mapped data units in the data frame. For ease of description, the quantity of mapped data units in the data frame is referred to as a scheduling accumulation value (j), where a value of j is a positive integer less than or equal to P.

For example, whether the first service obtains the sending permission is determined based on the line rate capacity, the service rate capacity of the first service, and the scheduling accumulation value may be implemented in the following first possible manner.

In a first possible manner, when (A + j) x C mod P < C , it is determined that the sending permission of the first service is obtained; or when (A + j) x C mod P ≥ C, it is determined that the sending permission of the first service is not obtained. A represents an initial value of counting the quantity of mapped data units in the data frame, and A is an integer greater than or equal to 0.

For example, when processing service data, the transmitting end may perform parallel processing of a plurality of services, and A may be set to a same value for different services, for example, 0. To reduce a probability that the plurality of services processed in parallel obtain sending permission at the same time, in other words, to reduce a conflict, A may be set to different values for different services, or A may be set to different values for services of a same priority. That is, different initial count values are used for the different services, and a counting range of j is [1, P]. For example, the services processed in parallel by the transmitting end include the first service and the second service. The first service is counted from 1, that is, A = 0, and the second service is counted from 2, that is, A = 1. It should be noted that, in specific implementation, A + j may be implemented by using one counter, and initial values of counters corresponding to different services may be different.

In addition, to reduce a quantity of bits occupied by the counter, each counter may be configured to cyclically count in 1 to P. That is, when the counter is increased from A + j to P, and then is increased by 1, the value of the counter is 1. Based on this, when it is determined whether the sending permission of the first service is obtained, the following second possible implementation manner may be further implemented:

In a second possible implementation manner, when [(A + j) mod P] x C mod P < C, it is determined that the sending permission of the first service is obtained; or when [(A + j) mod P] x C mod P ≥ C, it is determined that the sending permission of the first service is not obtained.

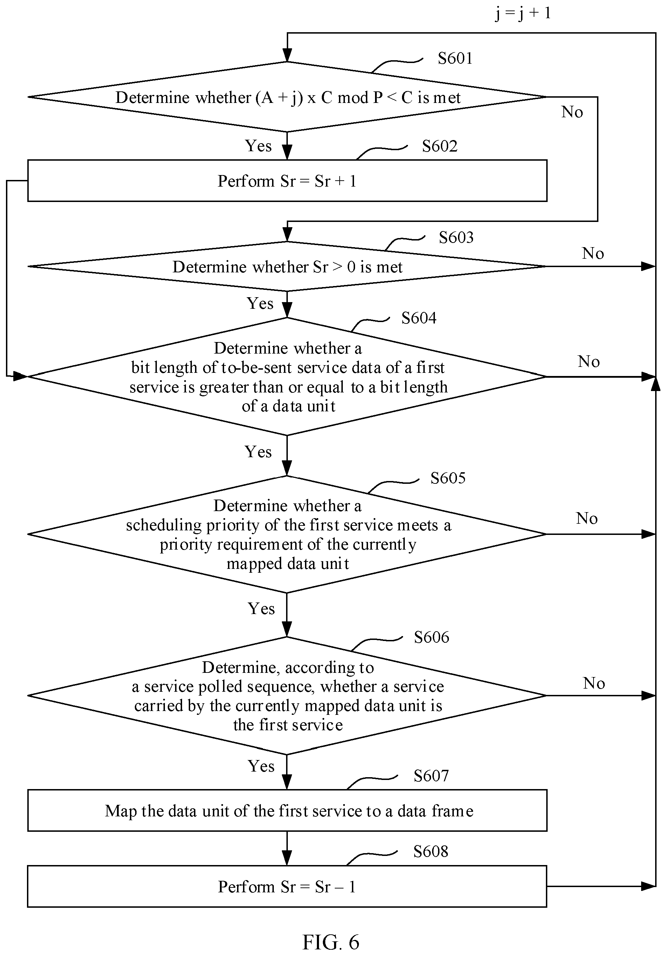

The following describes in detail a cyclic process of the foregoing OTN data sending control method with reference to more examples. FIG. 6 is a schematic flowchart of another possible data sending control method according to an embodiment of this application. When it is determined whether sending permission of a first service is obtained, in FIG. 6, an example in which a first feasible manner is used, and sending conditions include a first condition, a second condition, and a third condition is used. Each time a data unit of the first service is to be mapped to a data frame, the control method includes the following steps.

S601: When a data unit of the first service is to be mapped to the data frame, determine whether (A + j) x C mod P < C is met; and if yes, perform S602; or if no, perform S603.

S602: Perform Sr = Sr + 1. In this embodiment, an example in which a sending permission count value is accumulated by 1 each time is used.

S603: Determine whether Sr > 0 is met; and if yes, perform S604; or if no, perform j = j + 1, and perform a next round of determining procedure of mapping a data unit of the first service to the data frame, that is, perform S601.

S604: Determine whether a bit length of to-be-sent service data of the first service is greater than or equal to a bit length of the data unit. Briefly, whether a receiving buffer of the first service includes one complete data unit. If yes, S605 is performed. If no, j = j + 1 is performed, and the next round of determining procedure of mapping the data unit of the first service to the data frame is performed, that is, S601 is performed.

S605: Determine whether a scheduling priority of the first service meets a priority requirement of the currently mapped data unit; and if yes, perform S606; or if no, perform j = j + 1, and perform the next round of determining procedure of mapping the data unit of the first service to the data frame, that is, perform S601.

S606: Determine, according to a service polled sequence, whether a service carried by the currently mapped data unit is the first service; and if yes, perform S607; or if no, perform j = j + 1, and perform the next round of determining procedure of mapping the data unit of the first service to the data frame performed, that is, perform S601.

S607: Map the data unit of the first service to the data frame, and perform S608.

S608: Perform Sr = Sr - 1, perform j = j + 1, and perform the next round of determining procedure of mapping the data unit of the first service to the data frame, that is, perform S601.

It should be noted that a determining sequence of S604, S605, and S606 is not limited in this embodiment of this application. For example, S605 may be performed first, S604, and then S606. In addition, a sequence of performing S607 and S608 is not limited in this embodiment of this application.

After a plurality of rounds of mapping data units to the data frame, if the first service does not meet the sending condition, the first service may have accumulated a plurality of times of sending permission. In this case, because a line is idle, the sending permission is frequently used to map the data units of the first service to the data frame by the first service, causing buffer overflow on a downstream node. Based on this, this embodiment of this application provides a feasible solution, as an example. A sending interval count (I) is increased, so that a service data burst can be avoided, and the buffer overflow on the downstream node can be avoided.

Specifically, the sending condition of the first service in the foregoing embodiment may further include: whether a sending interval count value of the first service meets a requirement of a preconfigured value, where the preconfigured value is a positive integer less than or equal to a line rate capacity. When the data unit of the first service is to be mapped to the data frame, the sending interval count value is counted, where a counting step is a service rate capacity of the first service. When the data unit of the first service is mapped to the data frame, the sending interval count of the first service is reset and counting is restarted. For example, counting the sending interval count value may be accumulation or decrement.

In an example, counting the sending interval count value may be decrement. When each round of determining whether a data unit of the first service is mapped to the data frame is started, the service rate capacity of the first service is decremented from the sending interval count value of the first service. In this example, the preconfigured value may be 0, and whether the sending interval count value of the first service meets the requirement of the preconfigured value may mean whether the sending interval count value of the first service is less than or equal to 0. Each time the data unit of the first service is mapped to the data frame, the sending interval count is reset and counting is restarted. For example, the sending interval count may be reset to Y, where Y is a positive integer less than or equal to P, for example, Y = P/2.

In another example, counting the sending interval count value may be accumulation. When each round of determining whether a data unit of the first service is mapped to the data frame is started, the service rate capacity of the first service is accumulated to the sending interval count value of the first service. In this example, the preconfigured value may be X, where X is a positive integer less than or equal to P, for example, X = P/2. Whether the sending interval count value of the first service meets the requirement of the preconfigured value may be whether the sending interval count value of the first service is greater than or equal to X. Each time the data unit of the first service is mapped to the data frame, the sending interval count is reset and counting is restarted. For example, the sending interval count may be reset to 0.

The sending interval count value I is introduced in the foregoing solution. After the first service successfully sends one data unit, the sending interval count of the first service is reset to Y and counting is restarted. Therefore, when the first service needs to send a next data unit again, the first service needs to wait at least when the sending interval count meets the condition again. In this way, a problem of the buffer overflow on the downstream node caused by the service data burst of the first service, that is, caused by a case in which a plurality of data units exist in a cache storing the first service, can be avoided. It should be understood that the sending interval count in this embodiment of this application may alternatively use another naming manner. This is not limited in this application.

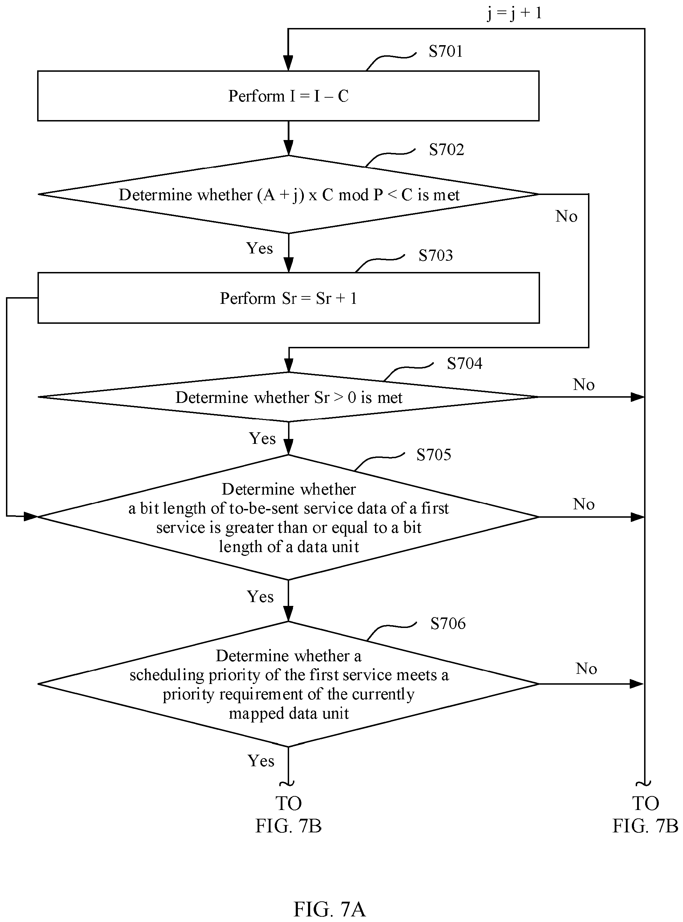

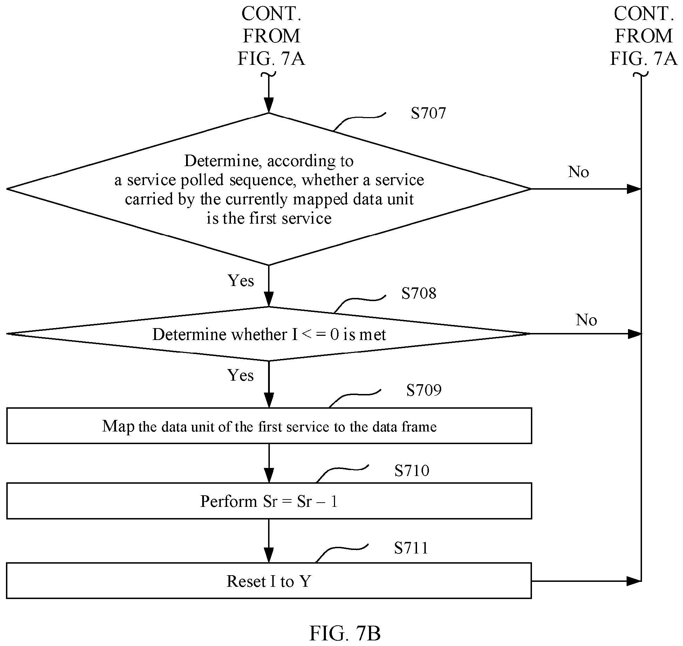

FIG. 7A and FIG. 7B is a schematic flowchart of a third possible data sending control method according to an embodiment of this application. In an embodiment corresponding to FIG. 7A and FIG. 7B, a sending interval count value is added on the basis of the embodiment corresponding to FIG. 6. In FIG. 7A and FIG. 7B, an example in which counting the sending interval count value may be decrement is used. Each time a data unit of a first service is to be mapped to a data frame, the control method may include the following steps.

S701: Perform I = I - C. When a sending interval counter is started, the sending interval count value may be 0.

S702: Determine whether (A + j) x C mod P < C is met; and if yes, perform S703, or if no, perform S704.

S703: Perform Sr = Sr + 1. In this embodiment, an example in which a sending permission count value is accumulated by 1 each time is used.

S704: Determine whether Sr > 0 is met; and if yes, perform S705; or if no, perform j = j + 1, and perform a next round of determining procedure of mapping a data unit of the first service to the data frame, that is, perform S701.

S705: Determine whether a bit length of to-be-sent service data of the first service is greater than or equal to a bit length of a data unit; and if yes, perform S706; or if no, perform j = j + 1, and perform the next round of determining procedure of mapping the data unit of the first service to the data frame, that is, perform S701.

S706: Determine whether a scheduling priority of the first service meets a priority requirement of the currently mapped data unit; and if yes, perform S707; or if no, perform j = j + 1, and perform the next round of determining procedure of mapping the data unit of the first service to the data frame, that is, perform S701.

S707: Determine, according to a service polled sequence, whether a service carried by the currently mapped data unit is the first service; and if yes, perform S708; or if no, perform j = j + 1, and perform the next round of determining procedure of mapping the data unit of the first service to the data frame performed, that is, perform S701.

S708: Determine whether I ≤ 0 is met; and if yes, perform S709; or if no, perform j = j + 1, and perform the next round of determining procedure of mapping the data unit of the first service to the data frame, that is, perform S701.

S709: Map the data unit of the first service to the data frame.

S710: Perform Sr = Sr - 1, and perform S711.

S711: Reset I to Y, and perform j = j + 1, and perform the next round of determining procedure of mapping the data unit of the first service to the data frame, that is, perform S701.

It should be noted that an execution sequence of S705, S706, and S707 is not limited in this embodiment of this application. An execution sequence of S709, S710, and S711 is not limited in this embodiment of this application.

The following describes in detail the second feasible implementation solution.

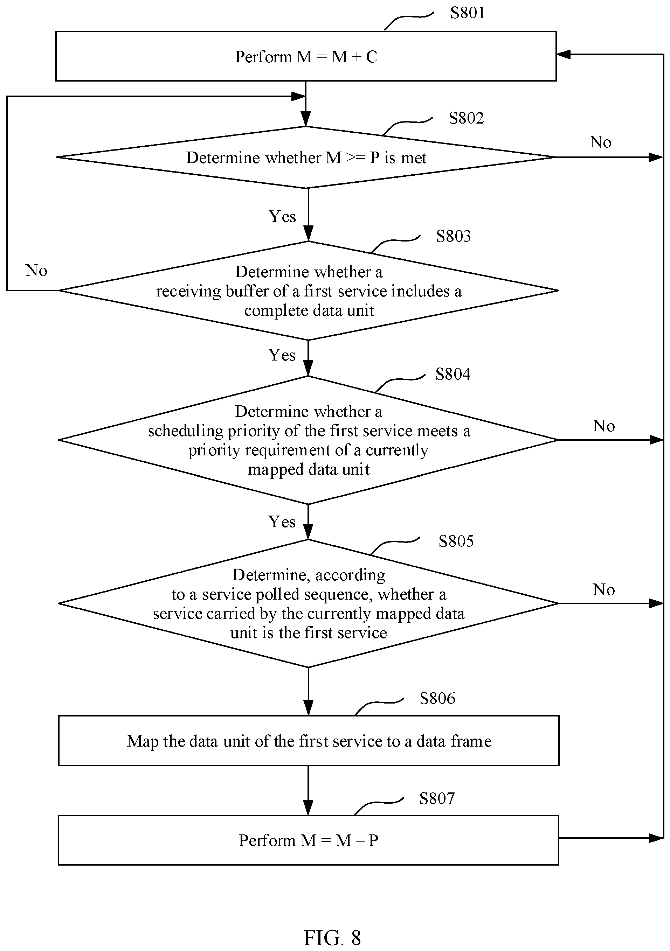

FIG. 8 is a schematic flowchart of a fourth possible data sending control method according to an embodiment of this application. The control method may be applied to a transmitting end. For example, an OTN device at the transmitting end may execute a control method procedure. Specifically, a processor, a chip, a chip system, a module having a sending control function, or the like in the transmitting-side OTN device may execute the control method procedure. Each time a data unit of a first service is to be mapped to a data frame, the control method includes the following steps.

S801: A service count value M is accumulated by C, that is, perform M = M + C, and perform S802.

S802: Determine whether M ≥ P is met, and if yes, perform determining whether sending conditions are met. Similar to the embodiments corresponding to FIG. 5 to FIG. 7B, the sending conditions may include at least one of a first condition, a second condition, or a third condition. In this embodiment, an example in which the sending conditions include the first condition, the second condition, and the third condition is used. If it is determined that M ≥ P is met, S803 is performed. If no, a next round of determining procedure of mapping a data unit of the first service to the data frame is performed, that is, S801 is performed.

S803: Determine whether a receiving buffer of the first service includes one complete data unit; and if yes, perform S804; or if no, perform S802.

S804: Determine whether a scheduling priority of the first service meets a priority requirement of a currently mapped data unit; and if yes, perform S805; or if no, perform the next round of determining procedure of mapping the data unit of the first service to the data frame, that is, perform S801.

S805: Determine, according to a service polled sequence, whether a service carried by the currently mapped data unit is the first service; and if yes, perform S806; or if no, perform the next round of determining procedure of mapping the data unit of the first service to the data frame performed, that is, perform S801.

S806: Map the data unit of the first service to the data frame, and perform S807.

S807: Perform M = M - P, and perform the next round of determining procedure of mapping the data unit of the first service to the data frame, that is, perform S801.

It should be noted that an execution sequence of S803 to S805 is not limited in this embodiment of this application. An execution sequence of S806 and S807 is not limited in this embodiment of this application.

In a possible implementation, to avoid a case in which a buffer overflow may occur on a downstream node due to a service data burst, a sending interval count may be increased based on the embodiment shown in FIG. 8, and a manner in which the sending interval count value may be counted in an accumulation or a decrement manner may be used. For related descriptions of the sending interval count, refer to the embodiment shown in FIG. 8. Details are not described herein again.

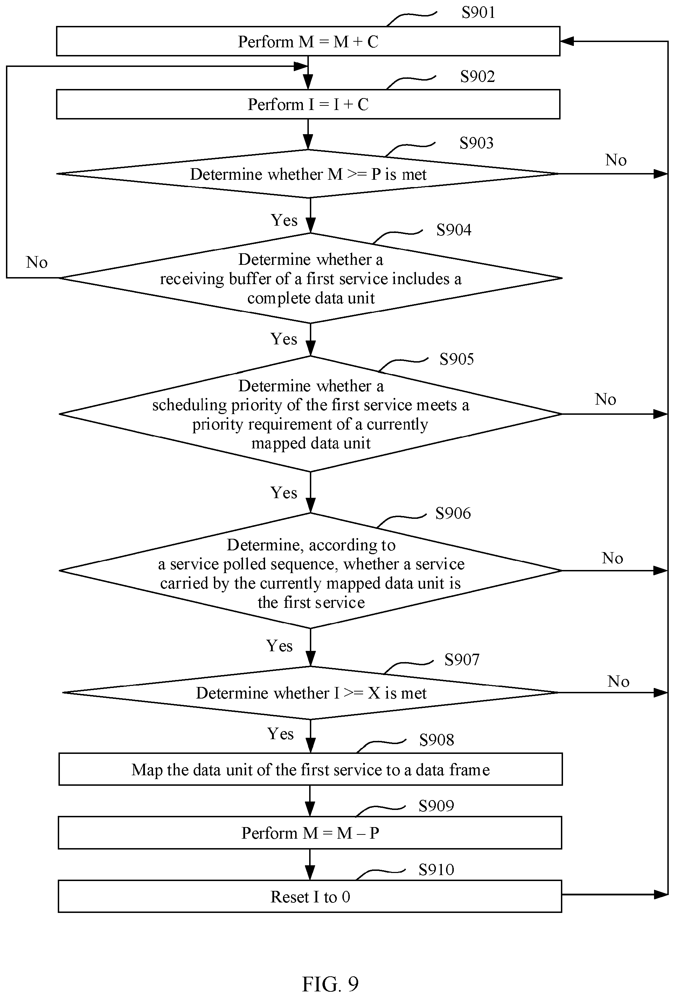

FIG. 9 is a schematic flowchart of a fifth possible data sending control method according to an embodiment of this application. A sending interval count value is added to the embodiment corresponding to FIG. 9 based on the embodiment corresponding to FIG. 8. In FIG. 9, a manner in which counting the sending interval count value may be accumulation is used as an example. Each time a data unit of a first service is to be mapped to a data frame, the control method includes the following steps.

S901: A service count value M is accumulated by C, that is, perform M = M + C, and perform S902.

S902: Perform I = I + C, and perform S903.

S903: Determine whether M ≥ P is met; and
if yes, perform S904; or if no, perform a next round of determining procedure of mapping a data unit of the first service to the data frame, that is, perform S901.

S904: Determine whether a receiving buffer of the first service includes one complete data unit; and if yes, perform S905; or if no, perform S902.

S905: Determine whether a scheduling priority of the first service meets a priority requirement of a currently mapped data unit; and if yes, perform S906; or if no, perform the next round of determining procedure of mapping the data unit of the first service to the data frame, that is, perform S901.

S906: Determine, according to a service polled sequence, whether a service carried by the currently mapped data unit is the first service; and if yes, perform S907; or if no, perform the next round of determining procedure of mapping the data unit of the first service to the data frame performed, that is, perform S901.

S907: Determine whether I ≥ X is met; and if yes, perform S908; or if no, perform j = j + 1, and perform the next round of determining procedure of mapping the data unit of the first service to the data frame, that is, perform S901.

S908: Map the data unit of the first service to the data frame.

S909: Perform M = M - P.

S910: Reset I to 0, and perform the next round of determining procedure of mapping the data unit of the first service to the data frame, that is, perform S901.

It should be noted that an execution sequence of S904 to S907 is not limited in this embodiment of this application. An execution sequence of S908 to S910 is not limited in this embodiment of this application.

FIG. 10A to FIG. 10D is a schematic flowchart of processing a plurality of services in parallel according to an embodiment of this application. When the plurality of services are processed in parallel, each service has own sending permission count Sr and/or sending interval count I (for the first feasible implementation), or each service has a service counter M and/or a sending interval counter I (for the second feasible implementation). In FIG. 10A to FIG. 10D, the first feasible implementation solution is used as an example.

It should be noted that for the plurality of services processed in parallel, used data unit rates may be the same or different, and therefore used P values may be the same or different. For example, if the data unit rates used by the plurality of services processed in parallel are the same, the used P values are the same. If the data unit rates used by the plurality of services processed in parallel are different, the used P values are different. In FIG. 10A to FIG. 10D, an example in which the data unit rates used by the plurality of services processed in parallel are the same is used.

To reduce a probability that the plurality of services processed in parallel obtain sending opportunities at the same time and avoid a conflict, in the first feasible implementation, when a mapping accumulation value is accumulated, different initial count values may be used for different services, in other words, A uses different values for the different services.

For example, a transmitting end processes i services in parallel. At a start processing moment of each service, an initial count value of the first service is 1, in other words, 1 is used as a start for accumulation, and an initial count value of the second service is 2, in other words, 2 is used as a start for accumulation, an initial count value of the third service is 3, in other words, 3 is used as a start for accumulation, ..., and an initial count value of the i^{th} service is i, in other words, i is used as a start for accumulation.

In the second feasible implementation, different initial values may be assigned to the service counter M, where the initial value is a positive integer less than or equal to P, for example, an integer multiple of C.

FIG. 10A to FIG. 10D is a schematic flowchart of a sixth possible data sending control method according to an embodiment of this application. In FIG. 10A to FIG. 10D, the first feasible implementation solution is used as an example. Refer to FIG. 10A to FIG. 10D. i services are used as an example. A sending interval count value of the first service is *I*₁, A of the first service is 0, and a sending permission count of the first service is Sr₁; a sending interval count value of the second service is *I*₂, A of the second service is 1, and a sending permission count of the second service is Sr₂; ...; and a sending interval count value of the i^{th} service is *Iᵢ,* A of the i^{th} service is i - 1, and a sending permission count of the i^{th} service is Sr*ᵢ*.

S1001-1 to S1011-1, ..., and S1001-i to S1011-i are similar to S701 to S711, and details are not described herein again. As shown in FIG. 10A to FIG. 10D, it should be noted that, when S1006-1 and S1007-1, ..., and S1006-i and S 1007-i are performed, whether a mapping priority meets a priority requirement of a currently mapped data unit is determined for each of the i services, and a data unit of a service that should be currently mapped is determined according to a service polled sequence, that is, a data unit of a service that should be mapped to a data frame is determined from the i services. For example, according to an existing priority sequence, the first service > the second service > the third service > ... > the i^{th} service. If S1005-1 is performed for the first service in a current round and the requirement is met, a data unit of the first service is mapped to the data frame according to the priority sequence. When determining whether mapping priorities meets priority requirements of currently mapped data units for second service to the i^{th} service, neither the requirements is met. After this round of mapping is completed, when S1005-1 is performed for the first service in a next round, the requirement is not met. If the second service meets the requirement that a bit length of to-be-sent service data is greater than or equal to a bit length of a data unit, when a priority requirement of a currently mapped data unit is met for the second service according to the priority sequence, a data unit of the second service is mapped to the data frame in this round.

Based on a same inventive concept as the foregoing embodiments, an embodiment of this application further provides a data sending control apparatus. The method, the apparatus, and the system are based on a same inventive concept. Because problem-resolving principles of the method, the apparatus, and the system are similar, mutual reference may be made between implementation of the apparatus and implementation of the method, and no repeated description is provided.

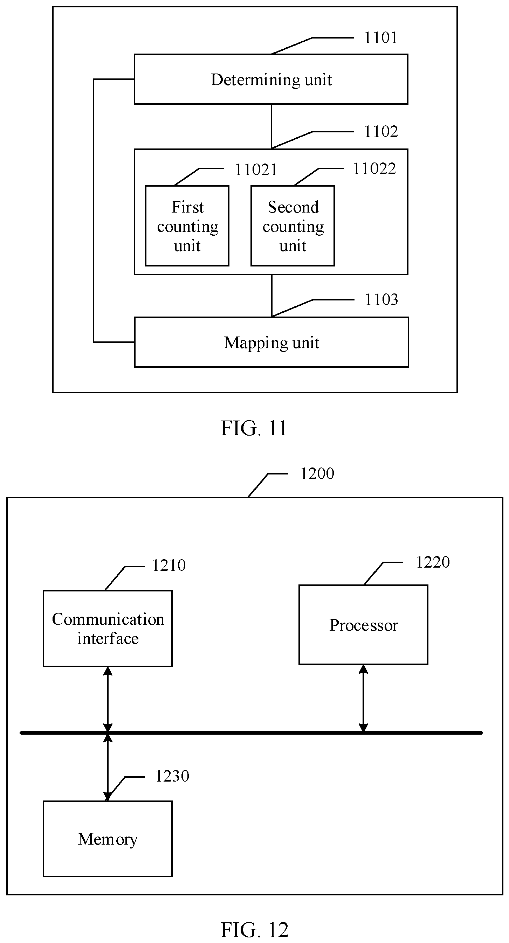

The apparatus may be used in an OTN device at a transmitting end, and the apparatus may be specifically a processor, a chip, a chip system, a module that is in a processor and that is configured to perform a function of the transmitting end, or the like. The apparatus may be implemented by the tributary board and/or the line board in FIG. 2. FIG. 11 is a schematic structural diagram of a possible data sending control apparatus according to an embodiment of this application. As shown in FIG. 11, the apparatus includes a determining unit 1101, a counting unit 1102, and a mapping unit 1103.

In an example, the determining unit 1101 is configured to perform S501, S503, and S504, the counting unit 1102 is configured to perform S502 and S506, and the mapping unit 1103 is configured to perform S505. In another example, the determining unit 1101 is configured to perform S601 and S603 to S606, the counting unit 1102 is configured to perform S602 and S608, and the mapping unit 1103 may be configured to perform S607. In still another example, the counting unit 1102 may include a first counting unit 11021 and a second counting unit 11022. The determining unit 1101 is configured to perform S702 and S704 to S708, the first counting unit 11021 is configured to perform S701 and S711, the second counting unit 11022 is configured to perform S703 and S710, and the mapping unit 1103 may be configured to perform S709. In still another example, the determining unit 1101 is configured to perform S802 to S805, the counting unit 1102 is configured to perform S801 and S807, and the mapping unit is configured to perform S806. In still another example, the counting unit 1102 may include a first counting unit 11021 and a second counting unit 11022. The determining unit 1101 is configured to perform S903 to S906, the first counting unit 11021 is configured to perform S901 and S910. The second counting unit 11022 is configured to perform S902 and S909, and the mapping unit 1103 may be configured to perform S908.

Optionally, the three units may further perform other related optional steps performed by the transmitting end mentioned in any one of the foregoing embodiments, and details are not described herein again.

In this embodiment of this application, division into the units is an example, and is merely logical function division. In an actual implementation, another division manner may be used. In addition, functional units in the embodiments of this application may be integrated into one processor, or may exist alone physically, or two or more units are integrated into one unit. The integrated unit may be implemented in a form of hardware, or may be implemented in a form of a software functional unit.

FIG. 12 is a schematic structural diagram of another possible data sending control apparatus according to an embodiment of this application. As shown in FIG. 12, the apparatus 1200 includes a communication interface 1210, a processor 1220, and a memory 1230. The apparatus may be used at a transmitting end, or may be used at a receiving end.

The determining unit 1101, the counting unit 1102, and the mapping unit 1103 shown in FIG. 11 may all be implemented by the processor 1220. For example, the processor 1220 may be the signal processor in the tributary board and/or the signal processor in the line board shown in FIG. 2. The processor 1220 receives service data through the communication interface 1210, and is configured to implement the methods performed by the transmitting end in FIG. 5 to FIG. 9. In an implementation process, each step of a processing procedure may complete, by using an integrated logic circuit of hardware in the processor 1220 or instructions in a form of software, the methods performed by the transmitting end in FIG. 5 to FIG. 9.

The communication interface 1210 in this embodiment of this application may be a circuit, a bus, a transceiver, or any other apparatus that can be configured to exchange information. For example, the any other apparatus may be a device connected to the apparatus 1200. For example, the any other apparatus may be a receive end or an intermediate node.

The processor 1220 in this embodiment of this application may be a general-purpose processor, a digital signal processor, an application-specific integrated circuit, a field programmable gate array or another programmable logic component, a discrete gate or a transistor logic component, or a discrete hardware component. The general-purpose processor may be a microprocessor, any conventional processor, or the like. The steps of the methods disclosed with reference to the embodiments of this application may be directly performed by a hardware processor, or may be performed by using a combination of hardware in the processor and a software unit. Program code executed by the processor 1220 and used to implement the foregoing methods may store in the memory 1230. The memory 1230 is coupled to the processor 1220. Coupling in the embodiments of this application is an indirect coupling or a communication connection between apparatuses, units, or modules, may be in an electrical, a mechanical, or another form, and is used for information exchange between the apparatuses, the units, or the modules. The processor 1220 may cooperate with the memory 1230. The memory 1230 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). The memory 1230 is any other medium that can be used to carry or store expected program code in a form of instructions or a data structure and that can be accessed by a computer, but is not limited thereto.

A specific connection medium between the communication interface 1210, the processor 1220, and the memory 1230 is not limited in the embodiments of this application. In this embodiment of this application, in FIG. 12, the memory 1230, the processor 1220, and the communication interface 1210 are connected through a bus. The bus is represented by using a thick line in FIG. 12, and a connection manner between other components is merely described as an example, and is not limited thereto. The bus may be classified into an address bus, a data bus, a control bus, and the like. For ease of representation, only one thick line is used to represent the bus in FIG. 12, but this does not mean that there is only one bus or only one type of bus.

Based on the foregoing embodiments, an embodiment of this application further provides a computer storage medium. The storage medium stores a software program, and when the software program is read and executed by one or more processors, the method provided in any one or more of the foregoing embodiments may be implemented. The computer storage medium may include any medium that can store program code, for example, a USB flash drive, a removable hard disk, a read-only memory, or a random-access memory.

Based on the foregoing embodiments, an embodiment of this application further provides a chip. The chip includes a processor and is configured to implement functions in any one or more of the foregoing embodiments, for example, obtaining or processing a data frame in the foregoing methods. Optionally, the chip further includes a memory. The memory is configured to store program instructions and data that are necessary and executed by the processor. The chip may include a chip, or may include a chip and another discrete device.

A person skilled in the art should understand that, in the embodiments of this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams. Alternatively, these computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A data sending control method, wherein the method is applied to a transmitting end and comprises:
Determining (S501), based on a line rate capacity and a service rate capacity of a first service, whether the first service obtains sending permission, wherein the line rate capacity is a maximum quantity of data units carried in a data frame, and the service rate capacity is a quantity of data units that are in the maximum quantity of data units carried in the data frame and that are used to carry the first service; and
when the first service obtains the sending permission, accumulating (S502) a sending permission count value of the first service; and when it is determined that a sending condition of the first service is met, mapping (S505) a data unit of the first service to the data frame and decrementing (S506) the sending permission count value of the first service; or
when the first service does not obtain the sending permission and it is determined that a sending permission count value of the first service is greater than zero and a sending condition of the first service is met, mapping (S505) a data unit of the first service to the data frame and decrementing (S506) the sending permission count value of the first service;
wherein the sending condition of the first service comprises at least one of the following: a bit length of to-be-sent service data of the first service is greater than or equal to a bit length of the data unit, a priority of the first service meets a priority requirement of the currently to-be-mapped data unit, and a service carried by the data unit currently to be mapped to the data frame according to a service polled sequence is the first service.

2. The method according to claim 1, wherein the determining, based on a line rate capacity and a service rate capacity of a first service, whether the first service obtains sending permission comprises:
determining, based on the line rate capacity, the service rate capacity of the first service, and a quantity of mapped data units in the data frame, whether the first service obtains the sending permission.

3. The method according to claim 2, wherein the determining, based on the line rate capacity, the service rate capacity of the first service, and a quantity of mapped data units in the data frame, whether the first service obtains the sending permission comprises:
when (A + j) x C mod P < C, determining that the first service obtains the sending permission; or
when (A + j) x C mod P ≥ C, determining that the first service does not obtain the sending permission; wherein
P represents the line rate capacity, C represents the service rate capacity of the first service, j represents the quantity of mapped data units in the data frame, A represents an initial value of counting the quantity of mapped data units in the data frame, and A is an integer greater than or equal to 0.

4. The method according to claim 2, wherein the determining, based on the line rate capacity, the service rate capacity of the first service, and a quantity of mapped data units in the data frame, whether the first service obtains the sending permission comprises:
when [(A + j) mod P] x C mod P < C, determining that the first service obtains the sending permission; or
when [(A + j) mod P] x C mod P ≥ C, determining that the first service does not obtain the sending permission; wherein
P represents the line rate capacity, C represents the service rate capacity of the first service, j represents the quantity of mapped data units in the data frame, A represents an initial value of counting the quantity of mapped data units in the data frame, and A is an integer greater than or equal to 0.

5. The method according to claim 3 or 4, wherein services processed in parallel by the transmitting end further comprise a second service in addition to the first service, and A corresponding to the first service is different from A corresponding to the second service.

6. The method according to any one of claims 1 to 5, wherein the sending condition further comprises: a sending interval count value of the first service meets a requirement of a preconfigured value, and the preconfigured value is a positive integer less than or equal to the line rate capacity; and
the method further comprises:
when the data unit of the first service is to be mapped to the data frame, counting the sending interval count value, wherein a counting step is the service rate capacity of the first service; and
when the data unit of the first service is mapped to the data frame, resetting the sending interval count of the first service and restart counting.

7. An OTN data sending control method, wherein the method is applied to a transmitting end and comprises:
when a data unit of a first service is to be mapped to a data frame in a current round, accumulating (S801, S901) a service count value by a service rate capacity of the first service, wherein the service count value is used to determine whether the first service obtains sending permission;
when it is determined, based on the service count value of the first service in the current round, that the first service obtains the sending permission and it is determined that a sending condition of the first service is met, mapping (S806, S908) the data unit of the first service to the data frame; and
when it is determined that the sending condition of the first service is not met, performing a next round of a determining procedure of mapping a data unit of the first service to the data frame; wherein
the service rate capacity is a quantity of data units that are in a maximum quantity of data units carried in the data frame and that are used to carry the first service;
the sending condition of the first service comprises at least one of the following: a bit length of to-be-sent service data of the first service is greater than or equal to a bit length of the data unit, a priority of the first service meets a priority requirement of the currently to-be-mapped data unit, and a service carried by the data unit currently to be mapped to the data frame according to a service polled sequence is the first service; and
performing the next round of a determining procedure of mapping a data unit of the first service to the data frame comprises the steps included in the current round.

8. The method according to claim 7, wherein the sending condition further comprises: a sending interval count value of the first service meets a requirement of a preconfigured value, and the preconfigured value is a positive integer less than or equal to a line rate capacity; and
the method further comprises: when the data unit of the first service is to be mapped to the data frame, counting the sending interval count value, wherein a counting step is the service rate capacity of the first service; and
when the data unit of the first service is mapped to the data frame, resetting the sending interval count of the first service and restart counting.

9. A data sending control apparatus, comprising a processor and a memory, wherein
the memory is configured to store program code; and
the processor is configured to implement the method according to any one of claims 1 to 8.

10. A chip, wherein the chip is connected to a memory, and is configured to read and execute program code stored in the memory, to implement the method according to any one of claims 1 to 8.

## Patentansprüche

1. Datensendesteuerungsverfahren, wobei das Verfahren auf ein Übertragungsende angewendet wird und Folgendes umfasst:
Bestimmen (S501), basierend auf einer Leitungsratenkapazität und einer Dienstratenkapazität eines ersten Dienstes, ob der erste Dienst eine Sendeerlaubnis erlangt, wobei die Leitungsratenkapazität eine maximale Menge von Dateneinheiten ist, die in einem Datenrahmen transportiert werden, und die Dienstratenkapazität eine Menge von Dateneinheiten ist, die in der maximalen Menge von Dateneinheiten enthalten sind, die in dem Datenrahmen transportiert werden, und die dazu verwendet werden, den ersten Dienst zu transportieren; und
wenn der erste Dienst die Sendeerlaubnis erlangt, Akkumulieren (S502) eines Sendeerlaubniszählwerts des ersten Dienstes; und
wenn bestimmt wird, dass eine Sendebedingung des ersten Dienstes erfüllt ist, Zuordnen (S505) einer Dateneinheit des ersten Dienstes zu dem Datenrahmen und Dekrementieren (S506) des Sendeerlaubniszählwerts des ersten Dienstes; oder
wenn der erste Dienst die Sendeerlaubnis nicht erlangt und bestimmt wird, dass ein Sendeerlaubniszählwert des ersten Dienstes größer als Null ist und eine Sendebedingung des ersten Dienstes erfüllt ist, Zuordnen (S505) einer Dateneinheit des ersten Dienstes zu dem Datenrahmen und Dekrementieren (S506) des Sendeerlaubniszählwerts des ersten Dienstes;
wobei die Sendebedingung des ersten Dienstes mindestens eines der Folgenden umfasst: eine Bitlänge der zu sendenden Dienstdaten des ersten Dienstes ist größer als oder gleich einer Bitlänge der Dateneinheit, eine Priorität des ersten Dienstes erfüllt eine Prioritätsanforderung der aktuell zuzuordnenden Dateneinheit und ein von der aktuell gemäß einer Dienstabfragesequenz dem Datenrahmen zuzuordnenden Dateneinheit transportierter Dienst ist der erste Dienst.

2. Verfahren nach Anspruch 1, wobei das Bestimmen, basierend auf einer Leitungsratenkapazität und einer Dienstratenkapazität eines ersten Dienstes, ob der erste Dienst eine Sendeerlaubnis erlangt, Folgendes umfasst:
Bestimmen, basierend auf der Leitungsratenkapazität, der Dienstratenkapazität des ersten Dienstes und einer Menge von zugeordneten Dateneinheiten in dem Datenrahmen, ob der erste Dienst die Sendeerlaubnis erlangt.

3. Verfahren nach Anspruch 2, wobei das Bestimmen, basierend auf der Leitungsratenkapazität, der Dienstratenkapazität des ersten Dienstes und einer Menge von zugeordneten Dateneinheiten in dem Datenrahmen, ob der erste Dienst die Sendeerlaubnis erlangt, Folgendes umfasst:
wenn (A + j) x C mod P < C, Bestimmen, dass der erste Dienst die Sendeerlaubnis erlangt; oder
wenn (A + j) x C mod P ≥ C, Bestimmen, dass der erste Dienst die Sendeerlaubnis nicht erlangt; wobei
P die Leitungsratenkapazität darstellt, C die Dienstratenkapazität des ersten Dienstes darstellt, j die Menge von zugeordneten Dateneinheiten in dem Datenrahmen darstellt, A einen Anfangswert zum Zählen der Menge von zugeordneten Dateneinheiten in dem Datenrahmen darstellt und A eine Ganzzahl größer als oder gleich 0 ist.

4. Verfahren nach Anspruch 2, wobei das Bestimmen, basierend auf der Leitungsratenkapazität, der Dienstratenkapazität des ersten Dienstes und einer Menge von zugeordneten Dateneinheiten in dem Datenrahmen, ob der erste Dienst die Sendeerlaubnis erlangt, Folgendes umfasst:
wenn [(A + j) mod P] x C mod P < C, Bestimmen, dass der erste Dienst die Sendeerlaubnis erlangt; oder
wenn [(A + j) mod P] x C mod P ≥ C, Bestimmen, dass der erste Dienst die Sendeerlaubnis nicht erlangt; wobei
P die Leitungsratenkapazität darstellt, C die Dienstratenkapazität des ersten Dienstes darstellt, j die Menge von zugeordneten Dateneinheiten in dem Datenrahmen darstellt, A einen Anfangswert zum Zählen der Menge von zugeordneten Dateneinheiten in dem Datenrahmen darstellt und A eine Ganzzahl größer als oder gleich 0 ist.

5. Verfahren nach Anspruch 3 oder 4, wobei Dienste, die durch das Übertragungsende parallel verarbeitet werden, ferner zusätzlich zu dem ersten Dienst einen zweiten Dienst umfassen und sich A, das dem ersten Dienst entspricht, von A, das dem zweiten Dienst entspricht, unterscheidet.

6. Verfahren nach einem der Ansprüche 1 bis 5, wobei die Sendebedingung ferner Folgendes umfasst: ein Sendeintervallzählwert des ersten Dienstes erfüllt eine Anforderung eines vorkonfigurierten Werts und der vorkonfigurierte Wert ist eine positive Ganzzahl kleiner als oder gleich der Leitungsratenkapazität; und
das Verfahren ferner Folgendes umfasst:
wenn die Dateneinheit des ersten Dienstes zu dem Datenrahmen zuzuordnen ist, Zählen des Sendeintervallzählwerts, wobei ein Zählschritt die Dienstratenkapazität des ersten Dienstes ist; und
wenn die Dateneinheit des ersten Dienstes dem Datenrahmen zugeordnet ist, Zurücksetzen der Sendeintervallzählung des ersten Dienstes und Neustarten der Zählung.

7. OTN-Datensendesteuerungsverfahren, wobei das Verfahren auf ein Übertragungsende angewendet wird und Folgendes umfasst:
wenn eine Dateneinheit eines ersten Dienstes in einer aktuellen Runde zu einem Datenrahmen zuzuordnen ist, Akkumulieren (S801, S901) eines Dienstzählwerts durch eine Dienstratenkapazität des ersten Dienstes, wobei der Dienstzählwert dazu verwendet wird, zu bestimmen, ob der erste Dienst eine Sendeerlaubnis erlangt;
wenn bestimmt wird, basierend auf dem Dienstzählwert des ersten Dienstes in der aktuellen Runde, dass der erste Dienst die Sendeerlaubnis erlangt, und bestimmt wird, dass eine Sendebedingung des ersten Dienstes erfüllt ist, Zuordnen (S806, S908) der Dateneinheit des ersten Dienstes zu dem Datenrahmen; und
wenn bestimmt wird, dass die Sendebedingung des ersten Dienstes nicht erfüllt ist, Durchführen einer nächsten Runde eines Bestimmungsverfahrens zum Zuordnen einer Dateneinheit des ersten Dienstes zu dem Datenrahmen; wobei
die Dienstratenkapazität eine Menge von Dateneinheiten ist, die in einer maximalen Menge von Dateneinheiten enthalten sind, die in dem Datenrahmen transportiert werden, und die dazu verwendet werden, den ersten Dienst zu transportieren;
die Sendebedingung des ersten Dienstes mindestens eines der Folgenden umfasst: eine Bitlänge der zu sendenden Dienstdaten des ersten Dienstes ist größer als oder gleich einer Bitlänge der Dateneinheit, eine Priorität des ersten Dienstes erfüllt eine Prioritätsanforderung der aktuell zuzuordnenden Dateneinheit und ein von der aktuell gemäß einer Dienstabfragesequenz dem Datenrahmen zuzuordnenden Dateneinheit transportierter Dienst ist der erste Dienst; und
das Durchführen der nächsten Runde eines Bestimmungsverfahrens zum Zuordnen einer Dateneinheit des ersten Dienstes zu dem Datenrahmen die Schritte, die in der aktuellen Runde beinhaltet sind, umfasst.

8. Verfahren nach Anspruch 7, wobei die Sendebedingung ferner Folgendes umfasst: ein Sendeintervallzählwert des ersten Dienstes erfüllt eine Anforderung eines vorkonfigurierten Werts und der vorkonfigurierte Wert ist eine positive Ganzzahl kleiner als oder gleich einer Leitungsratenkapazität; und
das Verfahren ferner Folgendes umfasst: wenn die Dateneinheit des ersten Dienstes zu dem Datenrahmen zuzuordnen ist, Zählen des Sendeintervallzählwerts, wobei ein Zählschritt die Dienstratenkapazität des ersten Dienstes ist; und
wenn die Dateneinheit des ersten Dienstes dem Datenrahmen zugeordnet ist, Zurücksetzen der Sendeintervallzählung des ersten Dienstes und Neustarten der Zählung.

9. Datensendesteuerungseinrichtung, umfassend einen Speicher und einen Prozessor, wobei
der Speicher dazu konfiguriert ist, einen Programmcode zu speichern; und
der Prozessor dazu konfiguriert ist, das Verfahren nach einem der Ansprüche 1 bis 8 umzusetzen.

10. Chip, wobei der Chip mit einem Speicher verbunden ist und dazu konfiguriert ist, einen in dem Speicher gespeicherten Programmcode zu lesen und auszuführen, um das Verfahren nach einem der Ansprüche 1 bis 8 umzusetzen.

## Revendications

1. Procédé de commande d'envoi de données, dans lequel le procédé est appliqué à une extrémité de transmission et comprend :
Le fait de déterminer (S501), sur la base d'une capacité de débit de ligne et d'une capacité de débit de service d'un premier service, si le premier service obtient l'autorisation d'envoi, dans lequel la capacité de débit de ligne est une quantité maximale d'unités de données transportées dans une trame de données, et la capacité de débit de service est une quantité d'unités de données qui se trouvent dans la quantité maximale d'unités de données transportées dans la trame de données et qui sont utilisées pour transporter le premier service ; et
lorsque le premier service obtient l'autorisation d'envoi, accumuler (S502) une valeur de comptage d'autorisation d'envoi du premier service ; et lorsqu'il est déterminé qu'une condition d'envoi du premier service est remplie, mettre en correspondance (S505) une unité de données du premier service avec la trame de données et décrémenter (S506) la valeur de comptage d'autorisation d'envoi du premier service ; ou
lorsque le premier service n'obtient pas l'autorisation d'envoi et qu'il est déterminé qu'une valeur de comptage d'autorisation d'envoi du premier service est supérieure à zéro et qu'une condition d'envoi du premier service est remplie, mettre en correspondance (S505) une unité de données du premier service avec la trame de données et décrémenter (S506) la valeur de comptage d'autorisation d'envoi du premier service ;
dans lequel la condition d'envoi du premier service comprend au moins l'un des éléments suivants : une longueur de bit des données de service à envoyer du premier service est supérieure ou égale à une longueur de bit de l'unité de données, une priorité du premier service satisfait une exigence de priorité de l'unité de données actuellement à mettre en correspondance, et un service transporté par l'unité de données actuellement à mettre en correspondance avec la trame de données selon une séquence d'interrogation de service est le premier service.

2. Procédé selon la revendication 1, dans lequel le fait de déterminer, sur la base d'une capacité de débit de ligne et d'une capacité de débit de service d'un premier service, si l'obtention ou non de l'autorisation d'envoi par le premier service comprend :
le fait de déterminer, sur la base de la capacité de débit de ligne, de la capacité de débit de service du premier service et d'une quantité d'unités de données mises en correspondance dans la trame de données, si le premier service obtient l'autorisation d'envoi.

3. Procédé selon la revendication 2, dans lequel le fait de déterminer, sur la base de la capacité de débit de ligne, de la capacité de débit de service du premier service et d'une quantité d'unités de données mises en correspondance dans la trame de données, si le premier service obtient l'autorisation d'envoi comprend :
lorsque (A + j) x C mod P < C, le fait de déterminer que le premier service obtient l'autorisation d'envoi ; ou
lorsque (A + j) x C mod P ≥ C, le fait de déterminer que le premier service n'obtient pas l'autorisation d'envoi ; dans lequel P représente la capacité de débit de ligne, C représente la capacité de débit de service du premier service, j représente la quantité d'unités de données mises en correspondance dans la trame de données, A représente une valeur initiale de comptage de la quantité d'unités de données mises en correspondance dans la trame de données, et A est un entier supérieur ou égal à 0.

4. Procédé selon la revendication 2, dans lequel le fait de déterminer, sur la base de la capacité de débit de ligne, de la capacité de débit de service du premier service et d'une quantité d'unités de données mises en correspondance dans la trame de données, si le premier service obtient l'autorisation d'envoi comprend :
lorsque [(A + j) mod P] x C mod P < C, le fait de déterminer que le premier service obtient l'autorisation d'envoi ; ou
lorsque [(A + j) mod P] x C mod P ≥ C, le fait de déterminer que le premier service n'obtient pas l'autorisation d'envoi ; dans lequel
P représente la capacité de débit de ligne, C représente la capacité de débit de service du premier service, j représente la quantité d'unités de données mises en correspondance dans la trame de données, A représente une valeur initiale de comptage de la quantité d'unités de données mises en correspondance dans la trame de données, et A est un entier supérieur ou égal à 0.

5. Procédé selon la revendication 3 ou 4, dans lequel les services traités en parallèle par l'extrémité de transmission comprennent également un second service en plus du premier service, et A correspondant au premier service est différent de A correspondant au second service.

6. Procédé selon l'une quelconque des revendications 1 à 5, dans lequel la condition d'envoi comprend également : une valeur de comptage d'intervalles d'envoi du premier service satisfait à une exigence d'une valeur préconfigurée, et la valeur préconfigurée est un entier positif inférieur ou égal à la capacité de débit de ligne ; et
le procédé comprend également :
lorsque l'unité de données du premier service doit être mise en correspondance avec la trame de données, le comptage de la valeur de comptage d'intervalles d'envoi, dans lequel une étape de comptage est la capacité de débit de service du premier service ; et
lorsque l'unité de données du premier service est mise en correspondance avec la trame de données, la réinitialisation du comptage d'intervalles d'envoi du premier service et recommencer le comptage.

7. Procédé de commande d'envoi de données OTN, dans lequel le procédé est appliqué à une extrémité de transmission et comprend :
lorsqu'une unité de données d'un premier service doit être mise en correspondance avec une trame de données dans un tour en cours, l'accumulation (S801, S901) d'une valeur de comptage de services par une capacité de débit de service du premier service, dans lequel la valeur de comptage de services est utilisée pour déterminer si le premier service obtient l'autorisation d'envoi ;
lorsqu'il est déterminé, sur la base de la valeur de comptage de services du premier service du tour en cours, que le premier service obtient l'autorisation d'envoi et qu'il est déterminé qu'une condition d'envoi du premier service est remplie, la mise en correspondance (S806, S908) de l'unité de données du premier service avec la trame de données ; et
lorsqu'il est déterminé que la condition d'envoi du premier service n'est pas remplie, réaliser un tour suivant d'une procédure de détermination de mise en correspondance d'une unité de données du premier service avec la trame de données ; dans lequel
la capacité de débit de service est une quantité d'unités de données qui se trouvent dans une quantité maximale d'unités de données transportées dans la trame de données et qui sont utilisées pour transporter le premier service ;
la condition d'envoi du premier service comprend au moins l'un des éléments suivants : une longueur de bit des données de service à envoyer du premier service est supérieure ou égale à une longueur de bit de l'unité de données, une priorité du premier service satisfait une exigence de priorité de l'unité de données actuellement à mettre en correspondance, et un service transporté par l'unité de données actuellement à mettre en correspondance avec la trame de données selon une séquence d'interrogation de service est le premier service ; et
la réalisation du tour suivant d'une procédure de détermination de mise en correspondance d'une unité de données du premier service avec la trame de données comprend les étapes incluses dans le tour en cours.

8. Procédé selon la revendication 7, dans lequel la condition d'envoi comprend également : une valeur de comptage d'intervalles d'envoi du premier service satisfait à une exigence d'une valeur préconfigurée, et la valeur préconfigurée est un entier positif inférieur ou égal à la capacité de débit de ligne ; et
le procédé comprend également : lorsque l'unité de données du premier service doit être mise en correspondance avec la trame de données, le comptage de la valeur de comptage d'intervalles d'envoi, dans lequel une étape de comptage est la capacité de débit de service du premier service ; et
lorsque l'unité de données du premier service est mise en correspondance avec la trame de données, la réinitialisation du comptage d'intervalles d'envoi du premier service et recommencer le comptage.

9. Appareil de commande d'envoi de données, comprenant un processeur et une mémoire, dans lequel
la mémoire est configurée pour stocker un code de programme ; et
le processeur est configuré pour mettre en œuvre le procédé selon l'une quelconque des revendications 1 à 8.

10. Puce, dans laquelle la puce est connectée à une mémoire, et est configurée pour lire et exécuter un code de programme stocké dans la mémoire, pour mettre en œuvre le procédé selon l'une quelconque des revendications 1 à 8.
